# EUROPEAN PATENT SPECIFICATION

(11) **EP 3 272 474 B1**
(45) Date of publication and mention of the grant of the patent: **01.05.2019**
(21) Application number: 16002434.5
(22) Date of filing: 16.11.2016
(51) Int. Cl.: B25J 15/00, F16B 21/16

(54) **QUICK RELEASE CONNECTION**
SCHNELL LÖSBARE VERBINDUNG
CONNEXION À DÉCONNEXION RAPIDE

(30) Priority: 25.07.2016 IT 201600076505
(43) Date of publication of application: 24.01.2018
(73) Proprietor: SAMEC S.R.L., 10090 Cascine Vica Rivoli (TO) (IT)
(72) Inventor: Scarlatelli, Nicola, I-10090 Cascine Vica Rivoli (TO) (IT)
(74) Representative: Garavelli, Paolo

(56) References cited:
- DE-A1-102006 053 592
- US-A- 4 859 110
- US-A- 4 897 014
- US-A1- 2013 103 193

## Description

The present invention refers to a quick release connection, in particular of the type with quick release through balls.

Advantageously, as will be described below in more detail, the quick release connection according to the present invention can be used, for example, in various sectors and various applications referred to modular structural systems, in particular, but obviously in a non-limiting way, in the industrial automation sector, in mechatronics and in robotics.

For such specific applications, in currently available structures, the configuration as made cannot be easily re-configured for further needs.

Other systems conceived to be re-configurable are generally oriented towards the same sector for which they are made and for geometries which cannot be dissimilar from the original configuration.

Quick release connections are further known, which have relevant sizes, weight and encumbrance, in addition to an ergonometry and a modular flexibility which are not wholly efficient or optimized for a specific application. In addition to the above listed limits, current quick release connection systems have high production costs.

US-A-4 859 110, US-A1-2013/103193 and US-A-4 897 014 disclose prior art quick release connections, operating differently from the quick release connection of the present invention.

Therefore, object of the present invention is solving the above prior art problems, by providing a quick release connection which is versatile and extremely modular to allow, with a single device, to be able to configure any carrier and non-carrier structure, and which at the same time can be easily produced with small costs, since it is composed of few parts, which take into account an adequate mechanical resistance, a dedicated design for applications in various manufacturing sectors and not, which comply with environmental needs, since all parts composing the assembly are adapted to be wholly recycled.

Another object of the present invention is providing a quick release connection which has a longer working life with respect to other prior art connections, since it is made with such materials and treatments as to be considered (for example, under industrial use conditions in environments which are not particularly aggressive, in warehouses, etc...) practically unlimited.

The above and other objects and advantages of the invention, as will appear from the following description, are obtained with a quick release connection as claimed in Claim 1. Preferred embodiments of the present invention are claimed in the dependent Claims.

It is intended that all enclosed claims are an integral part of the present disclosure.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, given as a non-limiting example, with reference to the enclosed drawings, in which:

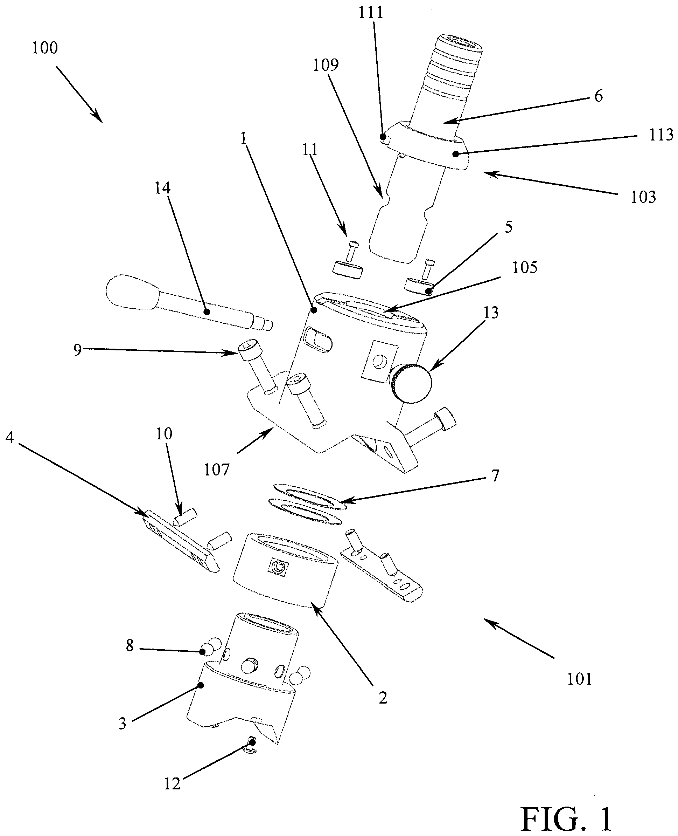

- Figure 1 shows an exploded perspective view of a preferred embodiment of the quick release connection according to the present invention;

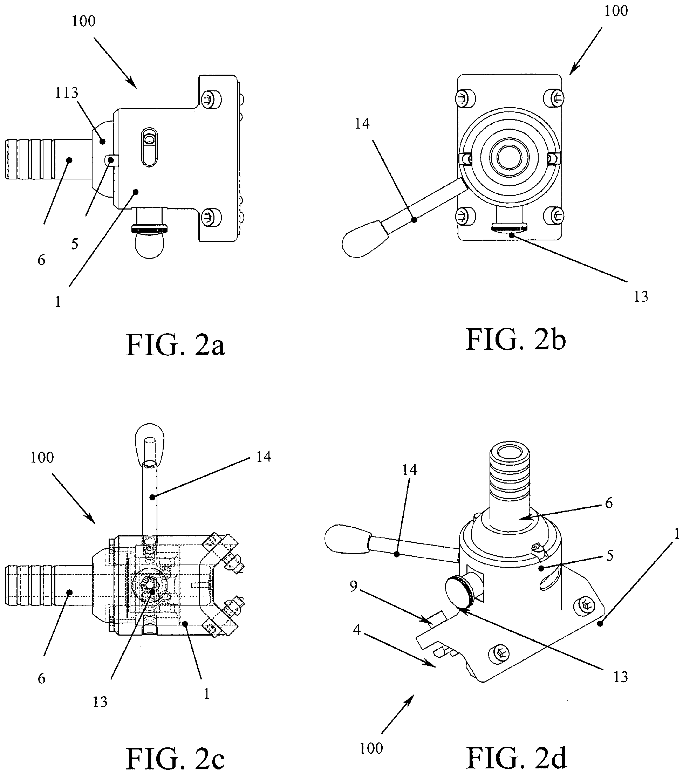

- Figures 2a and 2b respectively show a side view and a top view of the connection of Figure 1 assembled and in its operating position;

- Figure 2c shows a partial transparent side view of the connection of Figure 1 assembled and in its operating position;
- Figure 2d shows a perspective view of the connection of Figure 1 assembled and in its operating position; and
- Figures 3a and 3b respectively show a side view and a perspective view of the connection according to the present invention inserted in a branch of an arm within a robotics appled to the automotive sector.

Therefore, with reference to the Figures, it is possible to note that the quick release connection 100 according to the present invention comprises at least one female component 101 and at least one male component 103 adapted to be fastened to and unfastened from the female component 101: in particular, the female component 101 comprises at least one insertion seat 105 of the male component 103 inside which this latter one is blocked through a plurality of balls 8 going out at least partially of an internal wall of the seat 105, such balls 8 being able to pass, by interposing at least one locking/unlocking system and actuating at least one control means, from a first operating locking position, in which the balls 8 keep the male component 103 inside the insertion seat 105, to a second operating unlocking position, in which the balls 8 allow extracting the male component 103 from the insertion seat 105, and vice versa.

Advantageously, the male element 103 is composed of at least one pin 6 comprising at least one first sector equipped with at least one recess 109 in which the balls 8, being engaged in their first operating locking position, place and keep the pin 6 inside the blocking seat 105: obviously, downstream of this first sector, the pin 6 can comprise one or more second sectors on which the composition of the structure customized by the application needs will intervene.

In particular, the female component 101 is further composed of at least one main body 1 comprising a fastening base 107 which can be of such shape as to allow fastening the connection 1 of the present invention on any supporting shape, through the most suitable connecting means: moreover, the main body 1 houses inside it at least one containing body 3 adapted to radially receive the balls 8 responsible for operating the connection 1 of the present invention, whose base will be of such shape as to coincide with the fastening base 107 of the connection 1 itself. Moreover, the fastening base 107 can comprise at least one small block 4 adapted to operate as loking member of the connection 1 and be irreversible with the use of the fastening pins 10.

Preferably, the locking/unlocking system of the connection 1 of the present invention comprises at least one cam element 2, preferably received in the body 1, and inserted around the balls 8 and, in particular, the containing body 3, such cam element 2 being rotating on the balls 8 themselves to generate the locking/unlocking movement and for passing such balls 8 from their first operating position to their second operating position, and vice versa. In particular, the cam element 2 is radially equipped with a plurality of shaped seats (not shown), each of which is adapted to cooperate with a respective ball 8 so that, due to the shaped and adequate shape of such seats, there occurs, during the rotation of the cam element 2 along a direction or along an opposite direction, the passage of the balls 8 themselves from their first operating position to their second operating position with simultaneous locking or unlocking of the male component 103 from the seat 105, and vice versa.

Preferably, the control means comprise at least one fixed or mobile lever 14, which, by acting on the cam element 2, makes this latter one rotate, taking the balls 8, housed in the containing body 3, from their first operating position to their second operating position with simultaneous locking or unlocking of the male component 103 from the seat 105, and vice versa.

Moreover, the main body 1 can comprise one or more abutments 5, possibly kept by mechanical fasteners 11, which, by cooperating with respective seats 111 present on the pin 6, for example arranged around a suitable flange 113, provide a geometric reference for the univocal positioning of the male component 103 with respect to the female component 101 inside the seat 105, and perform a rotation-preventing function of the pin 6 itself inside the seat 105.

The main body 1 can further comprise at least one dampening system composed of one or more springs 7 to provide an efficient elastic pre-load and guarantee the locking and unlocking of the male component 103 with respect to the female component 101 by intervening in the management of recovery of clearances.

The quick release connection 1 according to the present invention can further comprise one or more fastening elements 12 adapted to perform an holding function of the mechanical system generated by the composition of the cam element 2, of the containing body 3, of the springs 7 and of the balls 8 inside the body 1.

The quick release connection 1 according to the present invention can further comprise at least one safety system 13, composed for example of a spring-dampened mobile centring pin, adapted to guarantee, by intervening on the cam element 2, that the locking/unlocking position is irreversibly kept, unless an intervention is made by an operator on the safety system 13 itself.

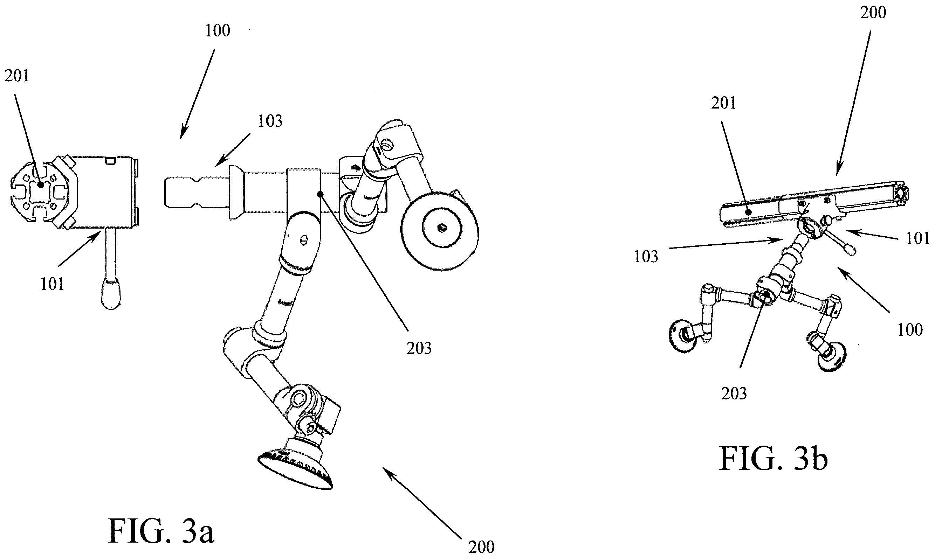

As stated, the quick release connection according to the present invention can find valid and advantageous application, for example for the configuration of modular structural systems, in particular, but obviously in a not limiting way, in the industrial automation sector, in mechatronics and in robotics. For such purpose, Figures 3c to 3c show a branch 200 of an arm, within robotics applied to the automotive sector, composed of at least one main arm 201 and at least one secondary arm 203, such secondary arm 203 being connected to the main arm 201 by interposing at least one quick release connection 1 according to the present invention. Preferably, the female component 101 of the connection 1 of the present invention is connected to the main arm 201, for example along a portion of this latter one composed of a diamond-shaped or hexagonal section bar, substantially known in the art, while the male component 103 is the terminal part of the secondary arm 203: therefore, due to the quick release connection 1 according to the present invention, it is possibile, in a quick and efficient way, to remove the secondary arm 203 from the main arm 201, for example for its replacement with another type of secondary arm 203, always equipped with the male component 103 as terminal element, to allow quickly reconfiguring the branch 200.

Obviously, all components and parts of the quick release connection 1 according to the present invention, in order to have a longer working life with respect to other prior art connections, can be made of the most suitable materials, and be subjected to surface treatments which are the most suitable for their specific use environments.

## Claims

1. Quick release connection (100) comprising at least one female component (101) and at least one male component (103) adapted to be fastened to and unfastened from said female component (101), wherein said quick release connection (100) further comprises at least one locking/unlocking system and at least one control means, and in that said female component (101) comprises at least one insertion seat (105) of said male component (103) inside which said male component (103) is blocked through a plurality of balls (8) going out at least partially of an internal wall of said seat (105), said balls (8) being able to pass, by interposing said locking/unlocking system and actuating said control means, from a first operating locking position, in which said balls (8) keep said male component (103) inside said insertion seat (105), to a second operating unlocking position, in which said balls (8) allow extracting said male component (103) from said insertion seat (105), and vice versa,
**characterized in that** said locking/unlocking system further comprises at least one cam element (2) inserted around said balls (8), said cam element (2) being rotating on said balls (8) to generate a locking/unlocking movement and pass said balls (8) from their first operating position to their second operating position, and vice versa.

2. Quick release connection (100) according to the previous claim, **characterized in that** said male element (103) is composed of at least one pin (6) comprising at least one first sector equipped with at least one recess (109) in which said balls (8), by being engaged in their first operating locking position, place and keep said pin (6) inside said blocking seat (105).

3. Quick release connection (100) according to claim 1, **characterized in that** said female component (101) is composed of at least one main body (1) which receives inside it at least one containing body (3) adapted to radially receive said balls (8).

4. Quick release connection (100) according to the previous claim, **characterized in that** said cam element (2) is radially equipped with a plurality of shaped seats, each of said seats being adapted to cooperate with a respective ball (8) so that, during the rotation of said cam element (2) along a direction or along an opposite direction, said balls (8) pass from their first operating position to their second operating position, and vice versa.

5. Quick release connection (100) according to any one of the previous claims, **characterized in that** said control means comprise at least one lever (14) which, by acting on said cam element (2), generate a rotation of said cam element (2) taking said balls (8) from their first operating position to their second operating position, and vice versa.

6. Quick release connection (100) according to any one of the previous claims, **characterized in that** said main body (1) comprises one or more abutments (5), which, by cooperating with respective seats (111) present on said pin (6), provide a geometric reference for a univocal positioning of said male component (103) with respect to said female component (101) inside said seat (105) and perform a rotation-preventing function of said pin (6) inside said seat (105).

7. Quick release connection (100) according to any one of the previous claims, **characterized in that** said main body (1) comprises at least one dampening system composed of one or more springs (7) to provide an elastic pre-load.

8. Quick release connection (100) according to any one of the previous claims, **characterized in that** it comprises at least one safety system (13) adapted to guarantee, by intervening on said cam element (2), that a locking/unlocking position is irreversibly kept unless an operator manually intervenes on said safety system (13).

9. Quick release connection (100) according to any one of the previous claims, **characterized in that** a branch (200) of an arm is composed of at least one main arm (201) and at least one secondary arm (203), said secondary arm (203) being connected to said main arm (201) by interposing at least one quick release connection (1).

## Patentansprüche

1. Kupplung mit Schnellanschluss (100), die mindestens einen äußeren Bestandteil (101) und mindestens einen inneren Bestandteil (103) enthält, die dazu dient, sich an den genannten äußeren Bestandteil (101) ein- und aus diesem auszukuppeln, wo die genannte Kupplung mit Schnellanschluss (100) außerdem mindestens ein Sperr-/Freigabesystem und mindestens ein Steuermittel enthält, und wo der genannte äußere Bestandteil (101) mindestens eine Aufnahme (105) des genannten inneren Bestandteils (103) enthält, in der der genannte innere Bestandteil (103) durch mehrere Kugeln (8) blockiert wird, die mindestens teilweise aus einer Innenwand der genannten Aufnahme (105) austreten, die genannten Kugeln (8) können durch Dazwischenlegen des genannten Sperr-/Freigabesystems und der Aktivierung des genannten Steuermittels von einer ersten Sperrbetriebsposition (8), in der die genannten Kugeln (8) den genannten inneren Bestandteil (103) in der genannten Aufnahme (105) halten, auf eine zweite Freigabebetriebsposition wechseln können, in der die genannten Kugeln (8) die Extraktion des genannten inneren Bestandteils (103) aus der genannten Aufnahme (105) und umgekehrt ermöglichen,
und **dadurch gekennzeichnet ist, dass** das genannte Sperr-/Freigabesystem außerdem mindestens ein Nockenelement (2) enthält, das im Bereich der genannten Kugeln (8) eingesetzt ist, das genannte Nockenelement (2) dreht sich auf den genannten Kugeln (8), um eine Sperr-/Freigabebewegung zu erzeugen und die genannten Kugeln (8) aus ihrer genannten ersten Betriebsposition auf ihre genannte zweite Betriebsposition und umgekehrt wechseln zu lassen.

2. Kupplung mit Schnellanschluss (100) gemäß dem vorhergehenden Patentanspruch, die **dadurch gekennzeichnet ist, dass** das genannte innere Element (103) aus mindestens einem Bolzen (6) besteht, der mindestens einen ersten Sektor enthält, welcher mit mindestens einem Hohlraum (109) ausgestattet ist, in dem sich die genannten Kugeln (8) in ihrer genannten ersten Sperrbetriebsposition (6) in der genannten Sperraufnahme (105) einkuppeln.

3. Kupplung mit Schnellanschluss (100) gemäß Patentanspruch 1, die **dadurch gekennzeichnet ist, dass** der genannte äußere Bestandteil (101) aus mindestens einem Hauptkörper (1) besteht, der in seinem Inneren mindestens einen Aufnahmekörper (3) enthält, welcher dazu dient, die genannten Kugeln (8) radial aufzunehmen.

4. Kupplung mit Schnellanschluss (100) gemäß dem vorhergehenden Patentanspruch, der **dadurch gekennzeichnet ist, dass** das genannte Nockenelement (2) radial mit mehreren geformten Aufnahmen ausgestattet ist, jede der genannten Aufnahmen dient dazu, mit einer entsprechenden genannten Kugel (8) zusammenzuarbeiten, sodass während der Drehung des genannten Nockenelements (2) in eine Richtung oder in die entgegengesetzte Richtung ein Durchgang der genannten Kugeln (8) aus ihrer genannten ersten Betriebsposition auf ihre genannte zweite Betriebsposition und umgekehrt vorhanden ist.

5. Kupplung mit Schnellanschluss (100) gemäß einem beliebigen der vorhergehenden Patentansprüche, die **dadurch gekennzeichnet ist, dass** das genannte Steuermittel mindestens einen Hebel (14) enthält, der durch die Einwirkung auf das genannte Nockenelement (2) eine Drehung des genannten Nockenelements (2) auslöst und die genannten Kugeln (8) aus ihrer genannten ersten Betriebsposition auf ihre genannte zweite Betriebsposition und umgekehrt führt.

6. Kupplung mit Schnellanschluss (100) gemäß einem beliebigen der vorhergehenden Patentansprüche, die **dadurch gekennzeichnet ist, dass** der genannte Hauptkörper (1) einen oder mehrere Anschläge (5) enthält, die mit den entsprechenden Aufnahmen (111) zusammenarbeiten und am genannten Bolzen (6) vorhanden sind und einen geometrischen Bezug für eine eindeutige Positionierung des genannten inneren Bestandteils (103) gegenüber dem äußeren Bestandteil (101) in der genannten Aufnahme (105) darstellen und eine Verdrehschutzfunktion des genannten Bolzens (6) in der genannten Aufnahme (105) ausüben.

7. Kupplung mit Schnellanschluss (100) gemäß einem beliebigen der vorhergehenden Patentansprüche, die **dadurch gekennzeichnet ist, dass** der genannte Hauptkörper (1) mindestens ein Dämpfungssystem enthält, das aus einer oder mehreren Federn (7) besteht, um eine elastische Vorspannung zu liefern.

8. Kupplung mit Schnellanschluss (100) gemäß einem beliebigen der vorhergehenden Patentansprüche, die **dadurch gekennzeichnet ist, dass** sie mindestens ein Sicherheitssystem (13) enthält, das dazu dient, durch Eingreifen am genannten Nockenelement (2) die irreversible Beibehaltung einer Sperr-/Freigabeposition zu garantieren, sofern nicht ein Bediener am genannten Sicherheitssystem (13) eingreift.

9. Kupplung mit Schnellanschluss (100) gemäß einem beliebigen der vorhergehenden Patentansprüche, die **dadurch gekennzeichnet ist, dass** ein Zweig (200) eines Arms aus mindestens einem Hauptarm (201) und mindestens einem sekundären Arm (203) besteht, der genannte sekundäre Arm (203) wird mit dem genannten Hauptarm (201) durch Dazwischenlegen von mindestens einer Kupplung mit Schnellanschluss (1) verbunden.

## Revendications

1. Raccord rapide par encliquetage (100) comprenant au moins un composant femelle (101) et un composant mâle (103) apte à s'accrocher et se décrocher du composant femelle (101), où le raccord rapide par encliquetage (100) comprend aussi un système de blocage/déblocage et un moyen de commande ; par ailleurs, le composant femelle (101) comprend au moins un siège d'insertion (105) du composant mâle (103) à l'intérieur duquel ce dernier est bloqué à travers une pluralité de billes (8) sortant au moins partiellement de l'intérieur du siège (105) ; ces billes (8) peuvent passer, à travers l'interposition du système de blocage/déblocage et l'actionnement du moyen de commande, d'une première position opérationnelle de blocage, où les billes (8) retiennent le composant mâle (103) à l'intérieur du siège d'insertion (105) à une seconde position opérationnelle de déblocage où les billes (8) permettent l'extraction du composant mâle (103) depuis le siège d'insertion (105), et inversement,
**caractérisé en ce que** le système de blocage/déblocage comprend aussi au moins un élément à came (2) inséré autour des billes (8) qui tourne sur celles-ci pour créer un mouvement de blocage/déblocage et faire passer les billes (8) de leur première position opérationnelle à leur seconde position opérationnelle, et inversement.

2. Raccord rapide par encliquetage (100), selon la revendication précédente, **caractérisé en ce que** l'élément mâle (103) est composé au moins d'un pivot (6) comprenant un premier secteur constitué d'un creux (109) où les billes (8), en s'encliquetant dans leur première position opérationnelle, positionnent et retiennent le pivot (6) dans le siège d'insertion (105).

3. Raccord rapide par encliquetage (100) selon la revendication 1, **caractérisé en ce que** le composant femelle (101) est composé au moins d'un corps principal (1) renfermant au moins un corps de contenance (3) apte à accueillir radialement les billes (8).

4. Raccord rapide par encliquetage (100) selon la revendication précédente, **caractérisé en ce que** l'élément à came (2) est doté radialement d'une pluralité de sièges moulés dont chacun est apte à coopérer avec une bille relative (8) de sorte que, pendant la rotation de l'élément à came (2) dans un sens ou dans le sens inverse, les billes (8) puissent passer de leur première position opérationnelle à leur seconde position opérationnelle et inversement.

5. Raccord rapide par encliquetage (100), selon l'une des revendications précédentes, **caractérisé en ce que** le moyen de commande comprend au moins un levier (14) qui, en agissant sur l'élément à came (2), détermine une rotation de ce dernier en déplaçant les billes (8) de leur première position opérationnelle à leur seconde position opérationnelle et inversement.

6. Raccord rapide par encliquetage (100), selon l'une des revendications précédentes, **caractérisé en ce que** le corps principal (1) comprend une ou plusieurs butées (5), qui en coopérant avec les sièges relatifs (111) présents sur le pivot (6), constituent une référence géométrique pour le positionnement univoque du composant mâle (103) par rapport au composant femelle (101) à l'intérieur du siège d'insertion (105) et exercent une fonction anti-rotation du pivot (6) à l'intérieur de ce siège (105).

7. Raccord rapide par encliquetage (100), selon l'une des revendications précédentes, **caractérisé en ce que** le corps principal (1) comprend au moins un système d'amortissement composé d'un ou de plusieurs ressorts (7) pour fournir une précharge élastique.

8. Raccord rapide par encliquetage (100), selon l'une des revendications précédentes, **caractérisé en ce qu'**il comprend au moins un système de sécurité (13) (13) apte à garantir, en intervenant sur l'élément à came (2), le maintien d'une position de blocage/déblocage de manière irréversible sauf en cas d'intervention d'un opérateur sur le système de sécurité (13).

9. Raccord rapide par encliquetage (100), selon l'une des revendications précédentes, **caractérisé en ce qu'**une branche (200) d'un bras est composée au moins d'un bras principal (201) et d'un bras secondaire (203) ; le bras secondaire est relié au bras principal (201) au moyen de l'interposition d'un raccord rapide par encliquetage (1) au moins.
